# EUROPÄISCHE PATENTANMELDUNG

(11) **EP 0 733 307 A1**
(43) Veröffentlichungstag der Anmeldung: **25.09.1996**
(21) Anmeldenummer: 96104428.6
(22) Anmeldetag: 20.03.1996
(51) Int. Cl.: A22C 13/02

(54) **Tragorgan für geraffte Naturdarmwursthüllen**

(30) Priorität: 24.03.1995 DE 19510898
(71) Anmelder: Haaga, Karl, 82131 Gauting (DE)
(72) Erfinder: Haaga, Karl, 82131 Gauting (DE)
(74) Vertreter: Kohlmann, Karl Friedrich, Dipl.-Ing.

(57) **Zusammenfassung**

Durch die Erfindung wird ein Tragorgan für geraffte Naturdarmwusthüllen, bestehend aus einem langgestreckten Profil (1) aus thermoplastischem Kunststoff, welches aus zwei Seitenteilen (2) besteht, die im Bereich ihrer Oberseite miteinander verbunden sind, und ein in Aufziehrichtung vorderes Ende besitzt, im Bereich dieses Endes zur Bildung eines Griffbereiches (3) mit einer Aussteifungsverformung ausgestattet, welche zum einen das Verkleben der beiden Seitenteile verhindert, und zum anderen eine verbesserte Griffunktion bietet. Hierdurch wird das Aufziehen der Naturdarmwursthüllen auf das Füllrohr der Wurstfüllmaschine erheblich erleichtert und Beschädigungen der gerafften Naturdarmwusthüllen vermieden.

## Beschreibung

Die Erfindung betrifft ein Tragorgan für geraffte Naturdarmwursthüllen aus einem langgestreckten Profil aus thermoplastischem Kunststoff, welches aus zwei Seitenteilen besteht, die im Bereich ihrer Oberseite miteinander verbunden sind und ein in Aufziehrichtung vorderes Ende besitzt, welches mit einem Griffbereich ausgestattet ist.

Bei der Wurstherstellung werden heute zum großen Teil Naturdarmwursthüllen verwendet. Diese Naturdarmwusthüllen werden in der Regel auf längsgeschlitzten, rohr- oder schlauchförmig ausgebildeten Tragorganen angeliefert, mittels derer die gerafften Naturdarmwusthüllen auf das Füllrohr der Wurstfüllmaschine aufgeschoben werden. Da die Lagerung und der Transport der mit den gerafften Naturdarmwusthüllen bestückten Tragorgane in einer Salzlösung erfolgt, sind die Tragorgane meist glatt und schwer greifbar. Die Schwierigkeit besteht nun darin, die auf das glatte Tragorgan gerafften Naturdarmwusthüllen auf das Füllrohr der Wurstmaschine aufzuschieben. Bei diesem Vorgang wird das Tragorgan häufig aufgrund seiner schlechten Griffigkeit und dem Verkleben der Seitenteile schräg auf das Füllrohr aufgeschoben, wodurch der Darm direkt mit der Mündung des Füllrohres in Berührung kommt. Dies kann zu Beschädigungen oder Einrissen am gerafften Darm führen, so daß die gesamte Naturdarmwursthülle unbrauchbar wird.

Neben den rohr- und schlauchförmigen Tragorganen wird in der Patentschrift DE 42 12 522 ein Tragorgan aus Kunststoff für geraffte Naturdarmwursthüllen beschrieben, welches aus einer in der Mitte längsgefalteten biegsamen Leiste aus thermoplastischem Kunststoff besteht, die mit ihren beiden Teilen in Form von planen Schenkeln auf dem Wurstmassefüllrohr rittlings und dachartig aufsitzt. Der Vorteil dieser konstruktiven Ausführung liegt in ihrer leichten Herstellbarkeit und damit in ihren geringen Herstellungskosten. Doch trotz der vorteilhaften Ausbildung dieses dachartigen Tragorganes besteht weiterhin das Problem der schlechten Griffigkeit und des Verklebens der Seitenteile miteinander.

Die Aufgabe der Erfindung ist es nun, ein Tragorgan der eingangs geschilderten Gattung derart weiterzubilden, daß das Aufschieben der Naturdarmwursthüllen auf das Füllrohr der Wurstfüllmaschine vereinfacht und das Risiko von Beschädigungen beim Aufschiebevorgang vermindert werden. Diese Aufgabe wird erfindungsgemäß dadurch gelöst, daß der Griffbereich des Tragorganes mit einer Aussteifungsverformung ausgestattet ist.

Durch das Vorsehen von Aussteifungsverformungen, die konstruktiv verschieden ausgebildet sein können, wird ein Verkleben der beiden Seitenteile des Tragorganes verhindert und das Tragorgan läßt sich leichter greifen. Hierdurch wird das Aufziehen der Naturdarmwursthüllen auf das Füllrohr der Wurstfüllmaschine erheblich erleichtert und sicherer gemacht.

Bei einer erfindungsgemäßen Ausführung ist die Aussteifungsverformung zieharmonika-artig quer zur Längsachse gefaltet angebracht. Vorteil dieser Ausführungsvariante ist die maschinelle Herstellbarkeit mittels thermischer oder Ultraschall-Verformung. Außerdem wird durch die Aussteifungsverformung eine Verbesserung der Griffunktion erzielt.

Eine weitere erfindungsgemäße Ausführung des Tragorganes ist es, wenn die Aussteifungsverformung in Form einer Lochung ausgebildet ist, deren Rand einen Versteifungsbereich aufweist. Dieser Versteifungsbereich kann aus einer Riffelung oder sonstwie gearteten Einprägung bestehen und dient der Versteifung. In diesem Fall erfüllt die Lochung die oben beschriebene Griffunktion. Auch hier kann zur maschinellen Herstellung des Versteifungsbereiches eine thermische bzw. Ultraschall-Verformung erfolgen.

Eine weitere sinnvolle Ausführung des erfindungsgemäßen Tragorganes stellt die wellenförmige Ausbildung der Aussteifungsverformung dar, aber auch das Anbringen rautierter Querstreifen erfüllt erfindungsgemäß die Aussteifungs- und Griffunktion. Beide genannten Ausführungen lassen sich maschinell mittels thermischer oder Ultraschall-Verformung herstellen.

Hervorzuheben bleibt, daß die erfindungsgemäß angebrachte Versteifung des Tragorganes sowohl für satteldachförmig ausgeführte, langgestreckte Profile aus thermoplastischem Kunststoff als auch für zylindersegmentartig ausgeführte langgestreckte Profile aus thermoplastischem Kunststoff sowie für alle ähnlichen, zum Verkleben neigende, schwer zu fassende Tragorgane für Naturdarmwursthüllen geeignet ist. Des weiteren kann die Aussteifungsverformung in einer beliebigen, maschinell herstellbaren Form ausgeführt sein, solange sie das Verkleben der Seitenteil des Tragorganes verhindert und Griffunktion aufweist.

Nachfolgend werden zwei Ausführungsbeispiele erfindungsgemäßer Tragorgane für Naturdarmwusthüllen mit Bezug auf die beigefügten Zeichnungen näher erläutert.

Es zeigen:
- Fig. 1: ein erfindungsgemäßes Tragorgan für Naturdarmwursthüllen mit einem zieharmonika-artig ausgeführten Versteifungs- und Griffbereich.
- Fig. 2: ein erfindungsgemäß ausgeführtes Tragorgan für Naturdarmwusthüllen mit einem als Lochung ausgeführtem Versteifungs- und Griffbereich.

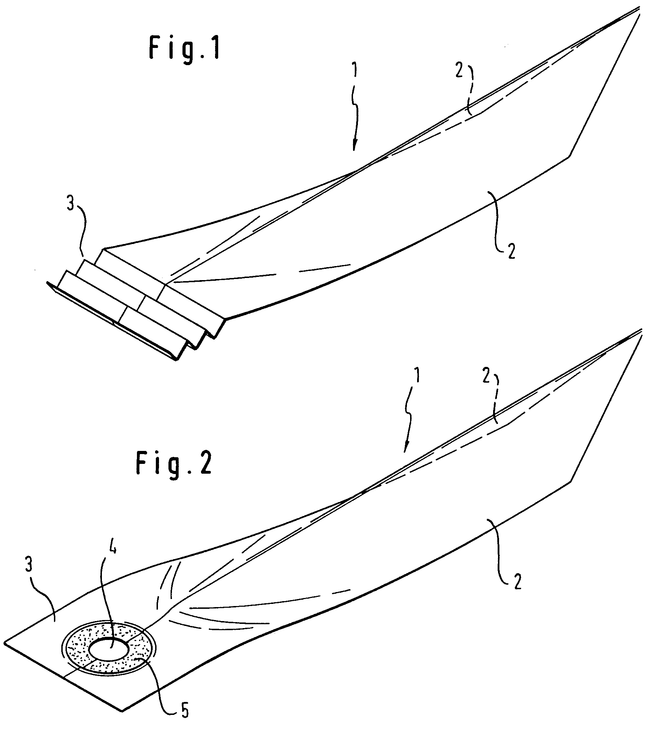

Fig. 1 zeigt ein Tragorgan für geraffte Naturdarmwusthüllen bestehend aus einem langgestreckten Profil aus thermoplastischem Kunststoff 1, welches aus satteldachförmig angeordneten Seitenteilen 2 besteht und im in Aufziehrichtung vorderen Bereich durch eine zieharmonika-artige Aussteifungsverformung versteift wird. Hierdurch wird außerdem die Griffunktion des Griffbereiches 3 verbessert. Außerdem wird durch die Aussteifungsverformung ein Verkleben der Seitenteile verhindert.

In Fig. 2 wird ein Tragorgan für geraffte Naturdarmwusthüllen, bestehend aus einem langgestreckten Profil aus thermoplastischem Kunststoff 1 und zwei satteldachförmig angebrachten Seitenteilen 2 dargestellt, welches an seinem in Aufziehrichtung vorderen Ende einen Griffbereich 3 aufweist, dessen Griffunktion durch die Lochung 4 und dessen Versteifungsfunktion durch den Randbereich 5 erreicht wird. Auch hier wird durch die Aussteifungsverformung ein Verkleben der Seitenteile verhindert.

## Patentansprüche

1. Tragorgan für geraffte Naturdarmwursthüllen, aus einem langgestreckten Profil aus thermoplastischem Kunststoff (1), welches aus zwei Seitenteilen (2) besteht, die im Bereich ihrer Oberseite miteinander verbunden sind und ein in Aufziehrichtung vorderes Ende besitzt, welches mit einem Griffbereich (3) ausgestattet ist,
**dadurch gekennzeichnet, daß**
das Profil im Griffbereich mit einer Aussteifungsverformung ausgestattet ist.

2. Tragorgan nach Anspruch 1,
**dadurch gekennzeichnet, daß**
die Aussteifungsverformung von einer zieharmonikaartig quer zur Längsachse des Profiles ausgestalteten Faltung gebildet ist.

3. Tragorgan nach Anspruch 1,
**dadurch gekennzeichnet, daß**
die Aussteifungsverformung in Form einer über beide Seitenteile reichenden Lochung (4) ausgebildet ist, deren Rand (5) einen Versteifungsbereich aufweist.

4. Tragorgan nach Anspruch 1,
**dadurch gekennzeichnet, daß**
die Aussteifungsverformung wellenförmig quer zur Längsachse des Profiles ausgeführt ist.

5. Tragorgan nach Anspruch 1,
**dadurch gekennzeichnet, daß**
die Aussteifungsverformung aus im wesentlichen quer zur Längsachse des Profiles über beide Seitenteile verlaufenden strukturierten Streifen gebildet ist.

6. Tragorgan nach Anspruch 1,
**dadurch gekennzeichnet, daß**
die Aussteifungsverformung in Form von Sicken, Einsenkungen oder dergleichen ausgebildet ist.
